# EUROPEAN PATENT APPLICATION

(11) **EP 3 273 094 A1**
(43) Date of publication of application: **24.01.2018**
(21) Application number: 16765097.7
(22) Date of filing: 18.03.2016
(51) Int. Cl.: F16H 3/66, F16D 13/52

(54) **AUTOMATIC TRANSMISSION**

(30) Priority: 19.03.2015 JP 2015056936
(71) Applicant: Jatco Ltd, Fuji-shi, Shizuoka 417-8585 (JP)
(72) Inventor: YOSHINO, Jun, Fuji-shi Shizuoka 417-8585 (JP); YAGI, Kan, Atsugi-shi Kanagawa 243-0123 (JP)
(74) Representative: Grünecker Patent- und Rechtsanwälte PartG mbB
(86) International application number: PCT/JP2016/058633
(87) International publication number: WO 2016/148268

(57) **Abstract**

[Summary] Forward nine speed stages are achieved by four planetary gear units and six frictional elements and established by combination of synchronously fastening three of the six frictional elements. To an automatic transmission having the above-mentioned units and elements, there are added a first connecting member (M1) that connects a first ring gear (R1) of the first planetary gear unit (PG1) to a second carrier (C2) of the second planetary gear unit (PG2) and, a fourth brake (B4) that is able to fix the first connecting member (M1) to a transmission case (TC). By combination of simultaneously fastening three of the seven frictional elements with fastening of the fourth brake, at least one new speed stage is established so that the automatic transmission establishes forward speed stages that are equal to or more than forward ten speed stages.

## Description

### Technical Field:

The present invention relates to automatic transmissions that are applicable to an automotive transmission that needs a multistage speed change and widening of gear ratio width.

### Background Art:

Hitherto, an automatic transmission is known, which uses three brakes and three clutches as six frictional elements for controlling four single pinion planetary gear units and establishes forward nine speed stages by combination of simultaneously fastening three of the six frictional elements (which is disclosed in for example Patent Document-1).

### Prior Art Documents:

### Patent Documents:

Patent Document-1: Japanese Patent 5492217

### Summary of Invention:

### Problems to be solved by Invention:

However, in the above-mentioned known automatic transmission, even though the forward nine speed stages are established by the four planetary gear units and the six frictional elements, the degree of freedom in selecting the gear ratio is low at the time when a performance for a desired function is required, which is a task to be solved. The performance requirements for the desired function are a requirement for setting a quite low gear ratio to realize an off-road running, a requirement for reducing all of the interstage ratios with good balance to improve a fuel consumption at a high-speed cruising, etc.,.

The present invention is provided by taking the above-mentioned problems into consideration and aims to provide an automatic transmission that can establish the performance requirement for realizing a desired function by increasing the degree of freedom in selecting the gear ratio by making a simple configuration change.

### Means for solving the problems:

In order to establish the above-mentioned object, in the present invention, a first planetary gear unit, a second planetary gear unit, a third planetary gear unit and a fourth planetary gear unit are provided as planetary gear units. A first brake, a second brake, a third brake, a first clutch, a second clutch and a third clutch are provided as frictional elements. Forward nine speed stages are established by combination of simultaneously fastening three of the six frictional elements. To an automatic transmission that establishes the above-mentioned function, there is added a fourth brake for fixing, to a transmission case, a connecting member that connects a first ring gear of the first planetary gear unit to a second carrier of the second planetary gear unit; and at least one speed stage is added by combination of simultaneously fastening three of the seven frictional elements with fastening of the fourth brake, so that the automatic transmission establishes speed stages that are equal to or more than forward ten speed stages.

### Effects of Invention:

That is, by combination of simultaneously fastening three of the seven frictional elements that include the first brake, the second brake, the third brake, the first clutch, the second clutch, the third clutch and the added fourth brake, at least one speed stage is added, so that forward speed stages equal to or more than ten speed stages are achieved. That is, although the automatic transmission of the invention is simple in construction because of addition of only one fourth brake B4 (frictional element) to the transmission that establishes forward nine speed stages by the four planetary gear units and six frictional elements, at least one new speed stage can be added to the forward nine speed stages. By the speed stages equal to or more than forward ten speed stages, the degree of freedom in selecting the gear ratio is increased, and thus, adaptability to the performance requirement is improved thereby increasing the possibility of realizing the target function. As a result, the degree of freedom in selecting the gear ratio can be increased with the simple construction, and thus, adaptability to the performance requirement is improved thereby increasing the possibility of realizing the target or desired function.

### Brief Description of Drawings:

Fig. 1 is a skeleton view of an automatic transmission of a first embodiment.
Fig. 2 is an ON/OFF table for seven frictional elements depicting that the automatic transmission of the first embodiment establishes forward eleven speed stages and reverse one speed stage by combination of simultaneously fastening three of the seven frictional elements.
Fig. 3 is a sectional view of a part of the automatic transmission of the first embodiment, showing a state wherein a fourth brake newly added is mounted to the automatic transmission.
Fig. 4 is a half-sectioned view of a first connecting member that has spline-engagement grooves with which drive plates of the fourth brake newly added in the automatic transmission of the first embodiment are spline-engaged.
Fig. 5 is a skeleton view showing a fastening condition of the frictional elements at a first speed stage that is newly added in the automatic transmission of the first embodiment.
Fig. 6 is a rotation speed map (collinear figure) that shows a rotation speed relation between six rotation members at the time when the automatic transmission of the first embodiment takes the newly added first speed stage.
Fig. 7 is a skeleton view showing fastening condition of the frictional elements at the ninth speed stage that is newly added in the automatic transmission of the first embodiment.
Fig. 8 is a rotation speed map (collinear figure) that shows a rotation speed relation between six rotation members at the time when the automatic transmission of the first embodiment takes a newly added ninth speed stage.
Fig. 9 is a table showing, as one example, gear ratios and interstage ratios at respective speed stages of an automatic transmission of comparative example.
Fig. 10 is a speed reduction ratio characteristic graph that depicts the relation between each speed stage and a corresponding speed reduction ratio of the automatic transmission of comparative example.
Fig. 11 is an interstage ratio characteristic graph that depicts the relation between each speed stage and a corresponding interstage ratio of the automatic transmission of comparative example.
Fig. 12 is a table showing, as one example, gear ratios and interstage ratios at respective speed stages of an automatic transmission of the first embodiment.
Fig. 13 is a speed reduction ratio characteristic graph that depicts the relation between each speed stage and a corresponding speed reduction ratio of the automatic transmission of the first embodiment.
Fig. 14 is an interstage ratio characteristic graph that depicts the relation between each speed stage and a corresponding interstage ratio of the automatic transmission of the first embodiment.
Fig. 15 is a fuel consumption ratio map that shows a comparative characteristic of the path of operating point that appears between an engine speed and an engine output torque when the speed stage is shifted to a higher speed stage.

### Best Mode for carrying out Invention:

In the following, the best mode for realizing an automatic transmission of the present invention will be described with reference to the first embodiment shown in the drawings.

### First Embodiment:

First, the construction will be described.

The automatic transmission of the first embodiment is a device that is to be mounted on an engine vehicle, a hybrid vehicle or the like as an automotive speed change device. In the following, the automatic transmission of the first embodiment will be described by dividing the description into a section of [Entire construction of the automatic transmission] and a section of [Fourth brake construction].

### [Entire construction of the automatic transmission]

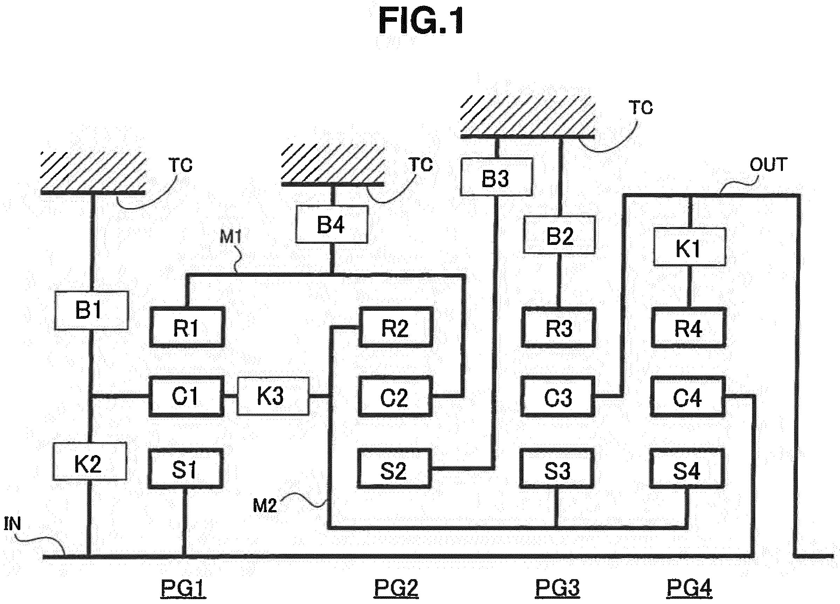

Fig. 1 is a skeleton view showing an automatic transmission of the first embodiment. In the following, the entire construction of the automatic transmission of the first embodiment will be described with reference to Fig. 1.

As is seen from Fig. 1, the automatic transmission of the first embodiment comprises planetary gear units, which are a first planetary gear unit PG1, a second planetary gear unit PG2, a third planetary gear unit PG3 and a fourth planetary gear unit PG4 and arranged in the direction from an input shaft IN to an output shaft OUT.

The first planetary gear unit PG1 is a single pinion type planetary gear unit and comprises a first sun gear S1, a first carrier C1 supporting pinions meshed with the first sun gear S1 and a first ring gear R1 meshed with the pinions.

The second planetary gear unit PG2 is a single pinion type planetary gear unit and comprises a second sun gear S2, a second carrier C2 supporting pinions meshed with the second sun gear S2 and a second ring gear R2 meshed with the pinions.

The third planetary gear unit PG3 is a single pinion type planetary gear unit and comprises a third sun gear S3, a third carrier C3 supporting pinions meshed with the third sun gear S3 and a third ring gear R3 meshed with the pinions.

The fourth planetary gear unit PG4 is a single pinion type planetary gear unit and comprises a fourth sun gear S4, a fourth carrier C4 supporting pinions meshed with the fourth sun gear S4 and a fourth ring gear R4 meshed with the pinions.

As is seen from Fig. 1, the automatic transmission of the first embodiment is equipped with the input shaft IN, the output shaft OUT, a first connecting member M 1 (connecting member), a second connecting member M2 and a transmission case TC. The automatic transmission of the first embodiment is further equipped with a first brake B1, a second brake B2, a third brake B3, a first clutch K1, a second clutch K2, a third clutch K3 and a fourth brake B4 as frictional elements.

The input shaft IN is a shaft to which a rotation drive torque is applied from a driving source, and the input shaft IN is constantly connected to the first sun gear S1 and the fourth carrier C4. The input shaft IN and the first carrier C1 are connected through the second clutch K2 in such a manner that they can be disconnected from each other.

The output shaft OUT is a shaft from which a speed-changed drive torque is outputted to drive road wheels through a propeller shaft, a final gear and the like, and the output shaft OUT is constantly connected to the third carrier C3. The output shaft OUT and the fourth ring gear R4 are connected through the first clutch K1 in such a manner that they can be disconnected from each other.

The first connecting member M1 is a member that constantly connects the first ring gear R1 of the first planetary gear unit PG1 and the second carrier C2 of the second planetary gear unit PG2 without interposing any frictional element therebetween.

The second connecting member M2 is a member that constantly connects the second ring gear R2 of the second planetary gear unit PG2, the third sun gear S3 of the third planetary gear unit PG3 and the fourth sun gear S4 of the fourth planetary gear unit PG4 without interposing any frictional element therebetween.

The first brake B1 is a frictional element that can brake/stop the rotation of the first carrier C1 relative to the transmission case TC.

The second brake B2 is a frictional element that can brake/stop the rotation of the third ring gear R3 relative to the transmission case TC.

The third brake B3 is a frictional element that can brake/stop the rotation of the second sun gear S2 relative to the transmission case TC.

The first clutch K1 is a frictional element that selectively connects the fourth ring gear R4 and the output shaft OUT.

The second clutch K2 is a frictional element that selectively connects the input shaft IN and the first carrier C1.

The third clutch K3 is a frictional element that selectively connects the first carrier C1 and the second connecting member M2.

The fourth brake B4 is a frictional element that can brake/stop the rotation of the first connecting member M1 relative to the transmission case TC.

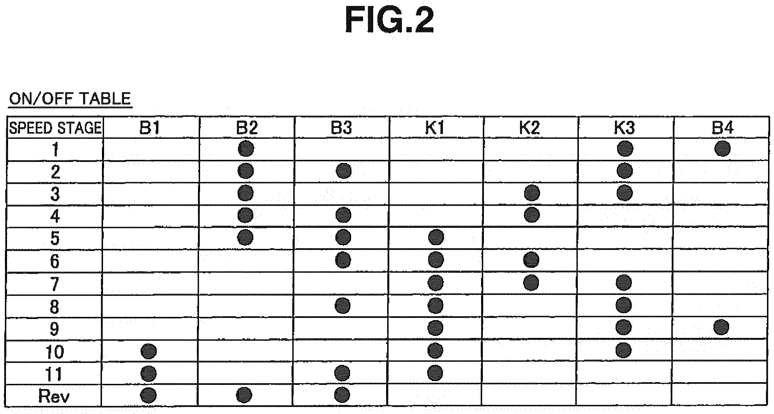

Fig. 2 is an ON/OFF table for six frictional elements depicting that the automatic transmission of the first embodiment establishes forward eleven speed stages and reverse one speed stage by combination of simultaneously fastening three of the six frictional elements. In the following, various speed stages established by the automatic transmission of the first embodiment will be described with reference to Fig. 2.

As is seen from Fig. 2, the first speed stage (1^{st}) is established when the second brake B2, the third clutch K3 and the fourth brake B4 are simultaneously fastened. As is seen from Fig. 2, the second speed stage (2^{nd}) is established when the second brake B2, the third brake B3 and the third clutch K3 are simultaneously fastened. As is seen from Fig. 2, the third speed stage (3^{rd}) is established when the second brake B2, the second clutch K2 and the third clutch K3 are simultaneously fastened. As is seen from Fig. 2, the fourth speed stage (4^{th}) is established when the second brake B2, the third brake B3 and the second clutch K2 are simultaneously fastened. As is seen from Fig. 2, the fifth speed stage (5^{th}) is established when the second brake B2, the third brake B3 and the first clutch K1 are simultaneously fastened. As is seen from Fig. 2, the sixth speed stage (6^{th}) is established when the third brake B3, the first clutch K1 and the second clutch K2 are simultaneously fastened. These first to sixth speed stages are of an underdrive speed stage that is established by a speed reduction gear ratio wherein the gear ratio exceeds 1.

As is seen from Fig. 2, the seventh speed stage (7^{th}) is established when the first clutch K1, the second clutch K2 and the third clutch K3 are simultaneously fastened. As is seen from Fig. 2, the eighth speed stage (8^{th}) is established when the third brake B3, the first clutch K1 and the third clutch K3 are simultaneously fastened. As is seen from Fig. 2, the ninth speed stage (9^{th}) is established when the first clutch K1, the third clutch K3 and the fourth brake B4 are simultaneously fastened. As is seen from Fig. 2, the tenth speed stage (10^{th}) is established when the first brake B1, the first clutch K1 and the third clutch K3 are simultaneously fastened. As is seen from Fig. 2, the eleventh speed stage (11^{th}) is established when the first brake B1, the third brake B3 and the first clutch K1 are simultaneously fastened. As is seen from fig. 2, the reverse stage (Rev) is established when the first brake B1, the second brake B2 and the third brake B3 are simultaneously fastened. The seventh speed stage in the seventh to eleventh speed stages is of a direct connection stage wherein the gear ratio is 1 (one), and the remaining eighth to eleventh speed stages are of an overdrive speed stage that is established by a speed increase gear ratio wherein the gear ratio is smaller than 1 (one).

Furthermore, as is seen from Fig. 2, in the speed stages from the first speed stage to the eleventh speed stage, the up-shifts and/or down-shifts between neighboring speed stages are effected through re-engagement speed changing. That is, when it is intended to shift the speed stage to the neighboring speed stage, unfastening of one frictional element and fastening of another frictional element are carried out while keeping fastening of two of three frictional elements.

### [Fourth brake construction]

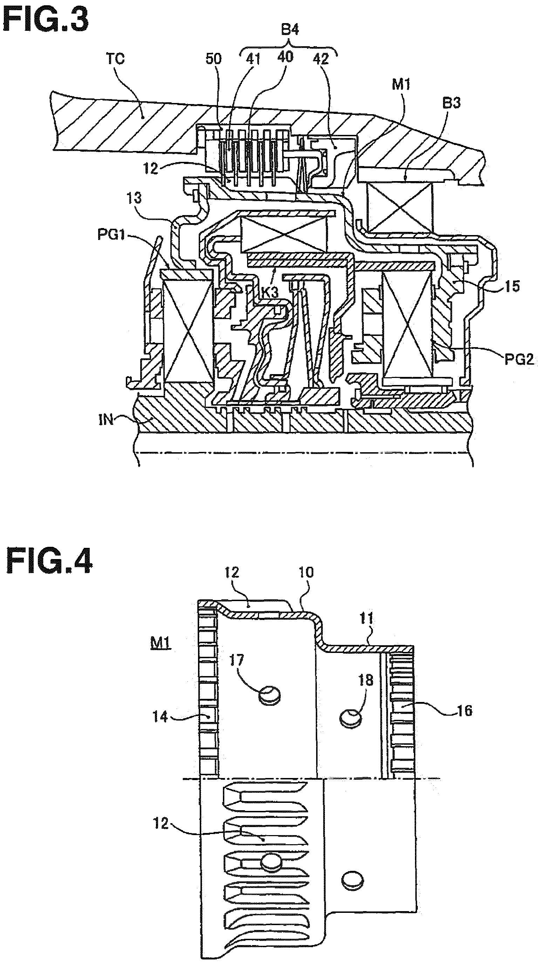

Fig. 3 shows a state wherein the fourth brake B4 newly added is mounted to the automatic transmission of the first embodiment. Fig. 4 shows the first connecting member M1 that has spline-engagement grooves with which drive plates of the fourth brake B4 are spline-engaged. In the following, the construction of the fourth brake B4 will be described with reference to Figs. 3 and 4.

As is seen from Fig. 3, the first connecting member M1 is a cylindrical drum member that is arranged to cover outer peripheral sides of the first planetary gear unit PG1, the third clutch K3 and the second planetary gear unit PG2, and as is seen from Fig. 4, the first connecting member M1 is shaped into a cylindrical drum including a larger diameter outer peripheral surface 10, a smaller diameter outer peripheral surface 12 and an annular step defined between. The larger diameter outer peripheral surface 10 of this first connecting member M1 is formed with spline-engagement grooves 12 with which after-mentioned drive plates 40 of the fourth brake B4 are spline-engaged. An inner surface of a mouth end portion of the larger diameter outer peripheral surface 10 is formed with spline-engagement grooves 14 with which a first connecting plate 13 extending to the first ring gear R1 is spline-engaged. An inner surface of a mouth end portion of the smaller diameter outer peripheral surface 11 is formed with spline-engagement grooves 16 with which a first connecting member 15 extending to the second carrier C2 is spline-engaged. The first connecting member M1 is formed at the spline-groove portion of the larger diameter outer peripheral surface 10 thereof with fourth brake cooling oil holes 17 and is formed at the spline-groove portion of the smaller diameter outer peripheral surface 11 thereof with fourth brake cooling oil holes 18. It is to be noted that, as is seen from Fig. 3, between the smaller diameter outer peripheral surface 11 of the first connecting member M1 and an inner peripheral surface of the transmission case TC that faces the peripheral surface 11, there is arranged the third brake B3.

As is seen from Fig. 3, the fourth brake B4 is a multiple disc brake that comprises mutually sandwiched drive and driven plates 40 and 41 and exhibits its engaging/releasing state when operated by a hydraulically actuated fourth brake piston 42. This fourth brake B4 is arranged between the larger diameter outer peripheral surface 10 of the first connecting member M1 and an inner peripheral surface of the transmission case TC that faces the peripheral surface 10. The inner peripheral surface of the transmission case TC is formed with spline-engagement grooves 50 with which the driven plates 41 of the fourth brake B4 are spline-engaged. That is, the drive plates 40 of the fourth brake B4 are engaged to the spline-engagement grooves 12 formed on the outer peripheral side of the first connecting member M1, and the driven plates 41 are engaged to the spline-engagement grooves 50 formed on the inner peripheral side of the transmission case TC.

In the following, operation will be described.

The operation of the automatic transmission of the first embodiment will be described separately in the following three sections which are a section for "Speed change operation at newly added speed stages", a section for "Comparison of gear ratio and interstage ratio between comparative example and the first embodiment" and a section for "Characteristic operation of the automatic transmission of the first embodiment".

### [Speed change operation at newly added speed stages]

The inventor noticed that the automatic transmission described in Japanese Patent 5492217, which comprises four planetary gear units and six frictional elements, obtains forward nine speed stages by combination of simultaneously fastening three of the six frictional elements and noticed that at least one new gear ratio can be produced by adding one frictional element to the automatic transmission of the publication.

When considering usage of one brake for simple construction and minimum design change, the inventor finally found that adding a fourth brake B4 to the first connecting member M1 is the best. Actually, the inventor considered other patterns for adding the brake to other member. However, the inventor realized that, in such patterns, only existing gear ratio is obtained or interlock is caused producing no merits.

The inventor then considered adding of the fourth brake B4 and speed stages obtainable when the fourth brake B4 is fastened, and finally found out the following four patterns, as patterns for producing gear ratios, and verified the gear ratio for each of the four patterns.
(a) Speed change pattern in which the first clutch K1, the third clutch K3 and the fourth brake B4 are fastened.
(b) Speed change pattern in which the third brake B3, the first clutch K1 and the fourth brake B4 are fastened.
(c) Speed change pattern in which the second brake B2, the third clutch K3 and the fourth brake B4 are fastened.
(d) Speed change pattern in which the second brake B2, the first clutch K1 and the fourth brake B4 are fastened.

In the speed change pattern (b) of the above-mentioned speed change patterns (a) to (d), there is produced a gear ratio that is the same as that of the eighth speed stage of the automatic transmission that establishes forward nine speed stages. In the speed change pattern (d), there is produced a gear ratio that is the same as that of the fourth speed stage of the automatic transmission that establishes forward nine speed stages. The inventor found that the speed change patterns (a) and (c) can produce new speed stages induced by new gear ratios.

In the automatic transmission of the first embodiment, the above-mentioned speed change patterns (a) and (c) are employed for the new speed stages to establish forward eleven speed stages. In these new speed stages, the speed stage added by the speed change pattern (c) is a first speed stage. This first speed stage is a quite low gear ratio speed stage in which the gear ratio is very low as compared with that of the first speed stage of the forward nine speed automatic transmission. The speed stage added by the speed change pattern (a) is the ninth speed stage. This ninth speed stage is a high gear ratio speed stage that is established by a gear ratio put between a gear ratio of the seventh speed stage of the forward nine speed automatic transmission and a gear ratio of the eighth speed stage of the forward nine speed automatic transmission. In the following, speed change operation for the first speed stage and speed change operation for the ninth speed stage will be described.

### (Speed change operation for the first speed stage)

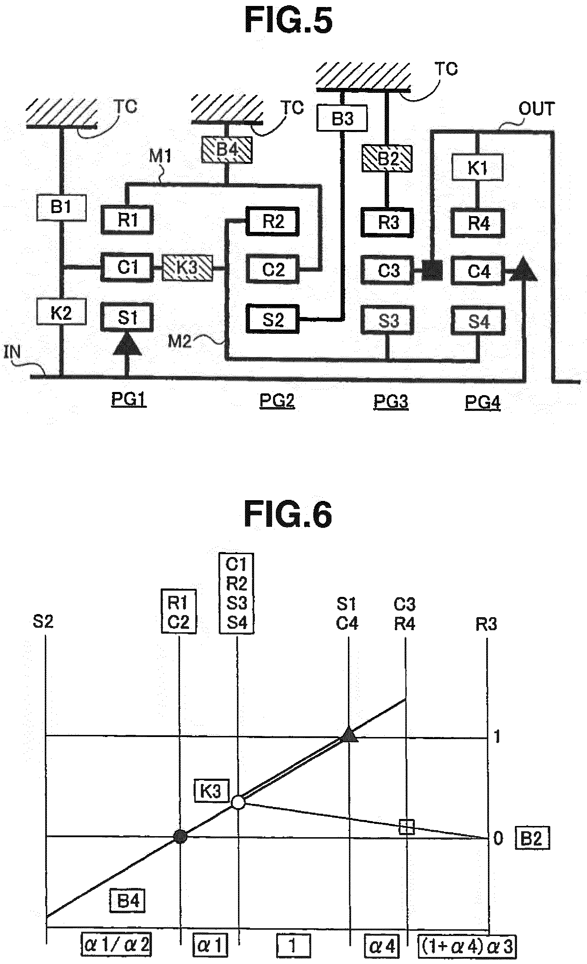

Fig. 5 shows ON/OFF condition of the frictional elements of the automatic transmission of the first embodiment at the time when the transmission takes the newly added first speed stage. Fig. 6 shows a rotation speed relationship between six rotation members at the time when the newly added first speed stage is taken. In the following, the speed change operation for the first speed stage will be described with reference to Figs. 5 and 6.

At the first speed stage (1^{st}), as is indicated by hatched blocks in Fig. 5, the second brake B2, the third clutch K3 and the fourth brake B4 are simultaneously fastened. Other frictional elements are unfastened

As is seen from Fig. 6, due to fastening of the fourth brake B4, the first ring gear R1 and the second carrier C2 are fixed to the transmission case TC. As is seen from Fig. 6, due to fastening of the third clutch K3, the first carrier C1, the second ring gear R2, the third sun gear S3 and the fourth sun gear S4 are reduced in rotation speed to a level that is produced by reducing the input rotation speed of the input shaft IN. As is seen from Fig. 6, due to fastening of the second brake B2, the third gear ring R3 is fixed to the transmission case TC.

Accordingly, when, in the third planetary gear unit PG3 with the third ring gear R3 fixed, the rotation produced by reducing the input rotation speed of the input shaft IN is inputted to the third sun gear S3, the remaining third carrier C3 is reduced in rotation speed to a level that is produced by further reducing the rotation speed of the third sun gear S3, and this speed reduced rotation is just transmitted to the output shaft OUT thereby to establish the first speed stage.

### (Speed change operation for the ninth speed stage)

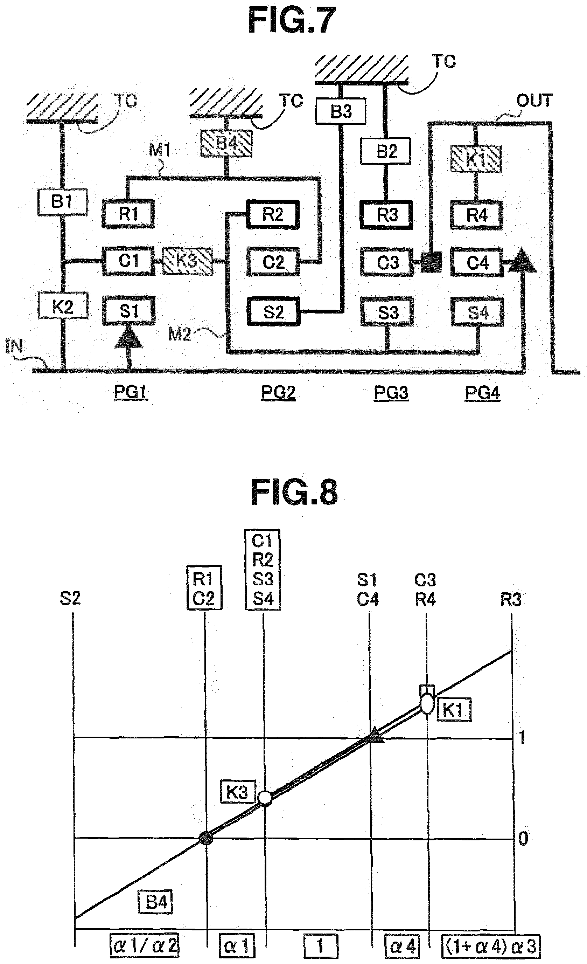

Fig. 7 shows ON/OFF condition of the frictional elements of the automatic transmission of the first embodiment at the time when the transmission takes the newly added ninth speed stage. Fig. 8 is shows a rotation speed relationship between the six rotation members at the time when the newly added ninth speed stage is established. In the following, the speed change operation for the ninth speed stage will be described with reference to Figs. 7 and 8.

At the ninth speed stage (9^{th}), as is indicated by hatched blocks in Fig. 7, the first clutch K1, the third clutch K3 and the fourth brake B4 are simultaneously fastened. Other frictional elements are unfastened.

As is seen from Fig. 8, due to fastening of the fourth brake B4, the first ring gear R1 and the second carrier C2 are fixed to the transmission case TC. As is seen from Fig. 8, due to fastening of the third clutch K3, the first carrier C1, the second ring gear R2, the third sun gear S3 and the fourth sun gear S4 are reduced in rotation speed to a level that is produced by reducing the input rotation speed of the input shaft IN. As is seen from Fig. 8, due to fastening of the first clutch K1, the third carrier C3 and the fourth ring gear R4 just produce the rotation of the output shaft OUT.

Accordingly, when, in the fourth planetary gear unit PG4, the rotation produced by reducing the input rotation speed of the input shaft IN is inputted to the fourth sun gear S4 and the rotation of the input shaft IN is inputted to the fourth carrier C4, the remaining fourth ring gear R4 is increased in rotation speed to a level that is produced by increasing the rotation speed from the input shaft IN, and this speed increased rotation is just transmitted to the output shaft OUT thereby to establish the ninth speed stage.

### (Comparison of gear ratio and interstage ratio between comparative example and the first embodiment)

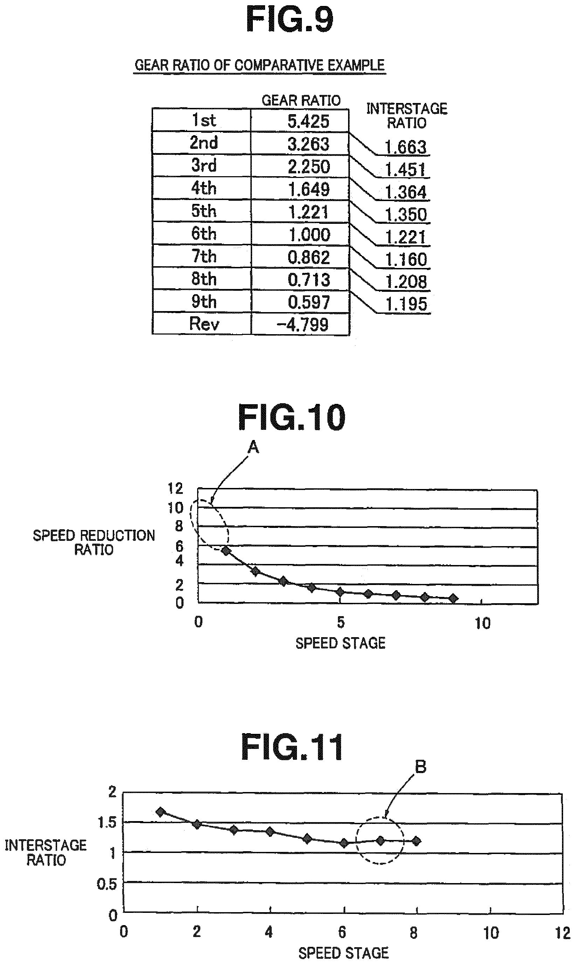

Fig. 9 shows gear ratios and interstage ratios at respective speed stages of an automatic transmission that is a comparative example, Fig. 10 shows a speed reduction ratio characteristic of the comparative example, and Fig. 11 shows an interstage ratio characteristic of the comparative example. In the following, the gear ratios and interstage ratios of the comparative example will be described with reference to Figs. 9 to 11. The description will be made based on an example wherein when the teeth number ratios between the sun gear and ring gear of each of the first to fourth planetary gear units PG1 to PG4 are set to α1, α2, α3 and α4 respectively, α1=0.4688, α2=0.4505, α3=0.4419 and α4=0.4022 are provided.

Now, the automatic transmission that comprises, as is described in Japanese Patent 5492217, four planetary gear units and six frictional elements and establishes forward nine speed stages by combination of simultaneously fastening three of the six frictional elements will be referred to as a comparative example. As is seen from Fig. 9, in case of the comparative example, the first speed gear ratio=5.425, the second speed gear ratio=3.263, the third speed gear ratio=2.250, the fourth speed gear ratio=1.649, the fifth speed gear ratio=1.221, the sixth speed gear ratio=1.000, the seventh speed gear ratio=0.862, the eighth speed gear ratio=0.713 and the ninth speed gear ratio=0.597 are provided. These are graphically represented by the graph of Fig. 10. The first speed gear ratio (=5.425) that is the lowest speed change ratio has no problem in case when the automatic transmission is intended to be used for normal travelling. However, in case when the automatic transmission is intended to be used for rough road travelling, it is impossible to provide a super-low speed stage that would be present in the area indicated by the dotted line "A" in Fig, 10.

As is seen from Fig. 9, in case of the comparative example, 1-2 interstage ratio=1.663, 2-3 interstage ratio=1.451, 3-4 interstage ratio=1.364, 4-5 interstage ratio=1.350, 5-6 interstage ratio=1.221, 6-7 interstage ratio=1.160, 7-8 interstage ratio=1.208 and 8-9 interstage ratio=1.195 are provided. These are graphically represented by the graph of Fig. 11. As compared with 6-7 interstage ratio=1.160 and 8-9 interstage ratio=1.195, the value of 7-8 interstage ratio (=1.208) is little large as is indicated by an arrow "B" in Fig. 11. Accordingly, in a high speed cruising where over-drive speed stages (seventh to ninth speed stages) are used, it is impossible to optimize the engine efficiency.

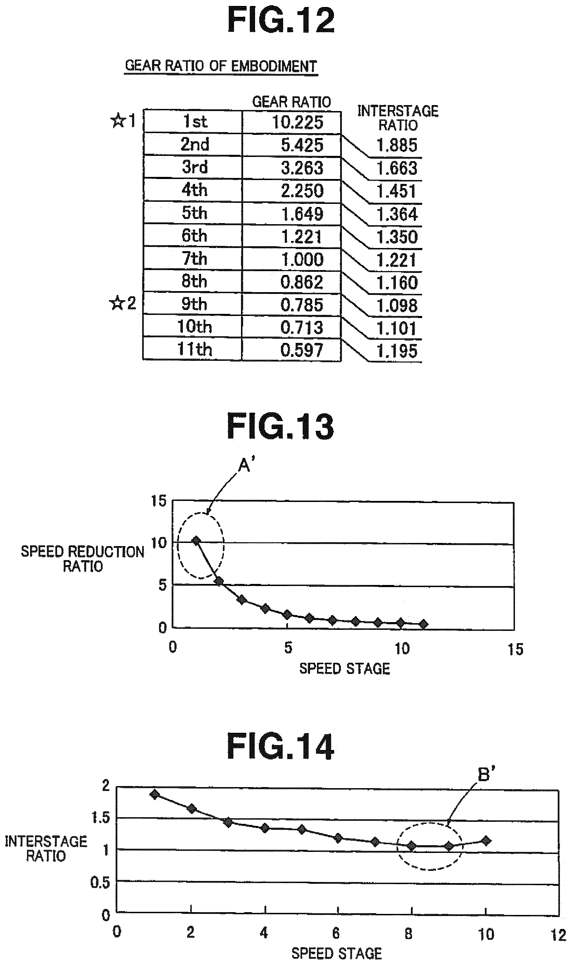

An automatic transmission provided by adding, to the automatic transmission of the comparative example, both a function for setting the super-low speed stage and a function for optimizing the engine efficiency at the high speed cruising is the automatic transmission of the first embodiment. In the first embodiment, the first speed stage that is added by fastening the fourth brake B4 is a super-low gear ratio speed stage that is further lower in gear ratio than the first speed stage of the forward nine speed automatic transmission (star-mark 1 of Fig. 12). It is to be noted that the ninth speed stage that is added by fastening the fourth brake B4 is a high gear ratio speed stage that has a gear ratio put between the gear ratio of the seventh speed stage of the forward nine speed automatic transmission and the gear ratio of the eighth speed stage of the forward nine speed automatic transmission (star-mark 2 of Fig. 12).

Fig. 12 shows gear ratios and interstage ratios at respective speed stages of the automatic transmission of the first embodiment, Fig. 13 shows a speed reduction ratio characteristic and Fig. 14 shows an interstage ratio characteristic. In the following, the gear ratios and interstage ratios of the first embodiment will be described with reference to Figs. 12 to 14. Like in the above-mentioned comparative example, the following description will be made based on an example wherein when the teeth number ratios between the sun gear and ring gear of the first to fourth planetary gear units PG1 to PG4 are set to α1, α2, α3 and α4 respectively, α1=0.4688, α2=0.4505, α3=0.4419 and α4=0.4022 are provided.

The automatic transmission of the first embodiment comprises four planetary gear units and seven frictional elements and establishes forward eleven speed stages by combination of simultaneously fastening three of the seven frictional elements. As is seen from Fig. 12, in case of the first embodiment, the first speed gear ratio=10.225, the second speed gear ratio=5.425, the third speed gear ratio=3.263, the fourth speed gear ratio=2.250, the fifth speed gear ratio=1.649, the sixth speed gear ratio= 1.221, the seventh speed gear ratio=1.000, the eighth speed gear ratio=0.862, the ninth speed gear ratio=0.785, the tenth speed gear ratio=0.713 and the eleventh speed gear ratio=0.597 are provided. This relationship is graphically represented by the graph of Fig. 13. As is indicated by the dotted line circle "A' " in Fig. 13, the first speed gear ratio (=10.225) serves as the super-low gear ratio for the rough road travelling, and thus, the requirement for using the transmission in the rough road travelling is fulfilled.

As is seen from Fig. 12, in case of the first embodiment, 1-2 interstage ratio=1.885, 2-3 interstage ratio= 1.663, 3-4 interstage ratio= 1.451, 4-5 interstage ratio=1.364, 5-6 interstage ratio=1.350, 6-7 interstage ratio=1.221, 7-8 interstage ratio=1.160 and 8-9 interstage ratio=1.098, 9-10 interstage ratio=1.101 and 10-11 interstage ratio=1.195 are provided. This relationship is graphically represented by the graph of Fig. 14. That is, the 8-9 interstage ratio and the 9-10 interstage ratio, which are provided for the newly added ninth speed stage, are 1.098 and 1.101 respectively. As is indicated by the arrow "B' " in Fig. 14, the interstage ratios provided between the eighth speed stage and the tenth speed stage are kept small. Accordingly, the engine efficiency at the high speed cruising wherein over-drive speed stages (eighth to eleventh speed stages) are used can be optimized.

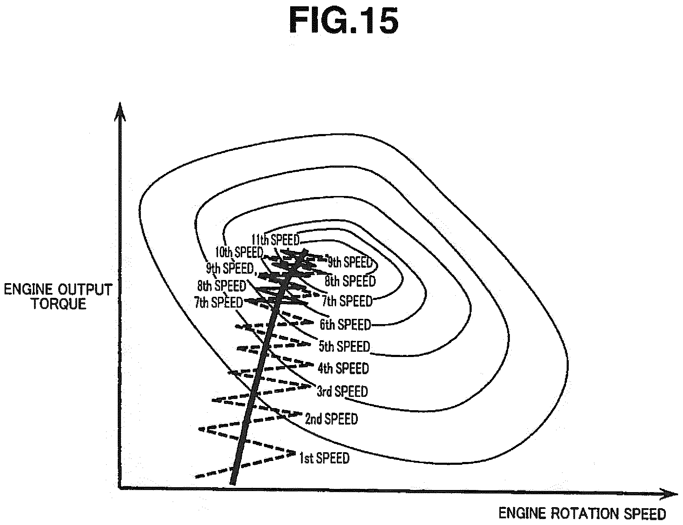

In the following, the reasons of the optimization of the engine efficiency at the high speed cruising by reducing the interstage ratios of the over-drive speed stages will be described with reference to Fig. 15. As is seen from the thin solid lines, Fig. 15 shows a relationship between an engine rotation speed and an engine output torque and an equal fuel economy characteristic represented by a plurality of circular characteristic lines. The fuel economy is improved as the operation point moves toward the center of the circular characteristic lines of the equal fuel economy, and thus, the central region (eye region) is the region where the fuel economy is optimized. However, actually, for optimizing the engine efficiency, it is ideal to move the operation point between the engine rotation speed and the engine output torque along the track indicated by the thick solid line in Fig. 15.

While, in case of the comparative example, since the interstage ratio is little large as is mentioned hereinabove, the engine rotation fluctuation caused by shift change is increased as is indicated by dotted lines of Fig. 15. While, in case of the first embodiment, since the interstage ratios are kept small as is indicated by the solid line in Fig. 15, the engine rotation fluctuation caused by shift change is small in the over-drive speed stages used at the high speed cruising. Accordingly, the engine efficiency approaches the ideal one by a degree that the engine rotation fluctuation at the over-drive speed stages is controlled small, and thus, the engine efficiency can be optimized.

### [Characteristic operation of the automatic transmission of the first embodiment]

In the first embodiment, the fourth brake B4 is added to the six frictional elements which are the first brake B1, the second brake B2, the third brake B3, the first clutch K1, the second clutch K2 and the third clutch K3. And, at least one speed stage is added by combination of simultaneously fastening three of the seven frictional elements with fastening of the fourth brake B4, so that the automatic transmission of the first embodiment establishes speed stages that are equal to or more than ten speed stages. That is, although the transmission of the first embodiment is simple in construction because of addition of only one fourth brake B4 to the automatic transmission that establishes forward nine speed stages by the four planetary gear units and six frictional elements, a new speed stage (for example, at least one of the first speed stage and ninth speed stage) is added to the forward nine speed stages. Accordingly, due to the speed stages that are equal to or more than ten speed stages, the degree of freedom in selecting the gear ratio is increased, and thus, adaptability to the performance requirement is improved thereby increasing the possibility of realizing the target function.

In the first embodiment, by combination of simultaneously fastening three of the seven frictional elements, the forward eleven speed stages are established. In the forward eleven speed stages, the first speed stage that is newly added by the fastening of the fourth brake B4 is the super-low gear ratio speed stage that is further lower in gear ratio than the first speed stage of the forward nine speed automatic transmission. In addition to this, the ninth speed stage that is added by fastening the fourth brake B4 is the high gear ratio speed stage that has a gear ratio put between the gear ratio of the seventh speed stage of the forward nine speed automatic transmission and the gear ratio of the eighth speed stage of the forward nine speed automatic transmission. That is, to the request of the super-low gear ratio for realizing the off-road running, such off-road running request can be realized by the first speed stage that is the super-low gear ratio speed stage that is further lower in gear ratio than the first speed stage of the forward nine speed automatic transmission. Furthermore, to the request for reducing all of the interstage ratios with good balance for improving the fuel consumption at a high-speed cruising, such fuel consumption improving request can be realized by the ninth speed stage that is the high gear ratio speed stage established by the gear ratio put between the gear ratio of the seventh speed stage of the forward nine speed automatic transmission and the gear ratio of the eighth speed stage of the forward nine speed automatic transmission. Accordingly, by adding only one fourth brake B4, two new speed stages are added, and thus, both the request for the off-road running and the request for fuel consumption improvement can be realized at the same time.

In the first embodiment, the first connecting member M1 is a cylindrical drum member that is arranged to cover the outer peripheral side of the first planetary gear unit PG1 and the second planetary gear unit PG2. And, the fourth brake B4 is arranged between the outer peripheral surface of the first connecting member M1 and the inner peripheral surface of the transmission case TC which faces the outer peripheral surface of the first connecting member M1. That is, the newly added fourth brake B4 is arranged at outer peripheral sides of the first and second planetary gear units PG1 and PG2 and placed at a position to face the inner peripheral surface of the transmission case TC. Accordingly, the fourth brake B4 can be easily added to existing parts without changing the layout of the parts. Accordingly, the fourth brake B4 can be easily added to the automatic transmission that establishes forward nine speed stages by combination of simultaneously fastening three of the six frictional elements.

In the first embodiment, the fourth brake B4 is the multiple disc brake that comprises mutually sandwiched drive and driven plates 40 and 41. The outer peripheral surface of the first connecting member M1 is formed with the spline-engagement grooves 12 to which the drive plates 40 are operatively engaged, and the inner peripheral surface of the transmission case TC is formed with the spline-engagement grooves 50 to which the driven plates 41 are operatively engaged. That is, on the outer peripheral side of the first connecting member M1, there are formed the spline-engagement grooves 12, and on the inner peripheral side of the transmission case TC, there are formed the spline-engagement grooves 50. By providing only such grooves, the drive plates 40 and the driven plates 41 can be operatively connected, so that the fourth brake B4 that is the multiple disc brake including the mutually sandwiched drive and driven plates 40 and 41 can be newly added. That is, by only forming the mutually facing surfaces of the first connecting member M1 and the transmission case TC with the spline-engagement grooves 12 and 50, the fourth brake B4 that is the multiple disc brake including the mutually sandwiched drive and driven plates 40 and 41 can be newly added.

In the following, effects will be described.

According to the automatic transmission of the first embodiment, the following effects are obtained.
(1) According to the present invention, there is provided an automatic transmission which comprises:
   a first planetary gear unit PG1, a second planetary gear unit PG2, a third planetary gear unit PG3 and a fourth planetary gear unit PG4 which are employed as four planetary gear units;
   a first brake B1, a second brake B2, a third brake B3, a first clutch K1, a second clutch K2 and a third clutch K3 which are employed as six frictional elements, the automatic transmission establishing forward nine speed stages by combination of simultaneously fastening three of the six frictional elements,
   wherein:
   a fourth brake B4 is added to the six frictional elements thereby to provide seven frictional elements, the fourth brake B4 detachably fixing a connecting member (first connecting member M1) to a transmission case TC, the connecting member M1 connecting a first ring gear R1 of the first planetary gear unit PG1 to a second carrier C2 of the second planetary gear unit PG2; and
   at least one speed stage is added to the automatic transmission by combination of simultaneously fastening three of the seven frictional elements with fastening of the fourth brake B4, so that the automatic transmission establishes speed stages that are equal to or more than forward ten speed stages.

Thus, the degree of freedom in selecting the gear ratio can be increased with simple construction. Thus, adaptability to the performance requirement is improved thereby increasing the possibility of realizing the target function.
(2) As is seen from Fig. 2, the automatic transmission establishes forward eleven speed stages by combination of simultaneously fastening three of the six frictional elements;
   the first speed stage added due to fastening of the fourth brake B4 is set to a super-low gear ratio speed stage that is further lower in gear ratio than the first speed stage of the forward nine speed automatic transmission; and
   the ninth speed stage added due to fastening of the fourth brake B4 is set to a high gear ratio speed stage that has a gear ratio put between respective gear ratios of the seventh and eighth speed stages of the forward nine speed automatic transmission.

Accordingly, in addition to the effect (1), another effect is obtained wherein two new speed stages can be added by adding only the fourth brake B4. Thus, request for off-road running and request for improvement of fuel consumption are realized. Furthermore, shifting to a neighboring speed stage can be made through the re-engagement speed changing that includes fastening of one frictional element and unfastening of the other frictional element.
(3) In the automatic transmission of the invention,
   the connecting member (first connecting member M1) is a cylindrical drum member that is arranged to cover outer peripheral sides of the first and second planetary gear units PG1 and PG2; and
   the fourth brake B4 is disposed between an outer peripheral surface of the connecting member (first connecting member M1) and an inner peripheral surface of the transmission case TC that faces the outer peripheral surface of the connecting member. Accordingly, in addition to the effects (1) and (2), still another effect is obtained in which the fourth brake B4 can be easily added or applied to the automatic transmission that establishes the forward nine speed stages by combination of simultaneously fastening three of the six frictional elements.
(4) In the automatic transmission of the invention,
   the fourth brake B4 is a multiple disc brake that comprises mutually sandwiched drive and driven plates 40 and 41;
   the connecting member (first connecting member M1) is formed at the outer peripheral surface thereof with spline-engagement grooves 12 with which the drive plates 40 are engaged; and
   the transmission case TC is formed at the inner peripheral surface thereof with spline-engagement grooves 50 with which the driven plates 41 are engaged.

Accordingly, in addition to the effect (3), another effect is obtained in which by only forming the mutually facing surfaces of the first connecting member M1 and the transmission case TC with respective spline-engagement grooves 12 and 50, the fourth brake B4 of multiple disc brake type can be added.

The automatic transmission of the present invention has been described hereinabove with reference to the first embodiment. However, the concrete construction of the automatic transmission of the invention is not limited to the first embodiment, and design change and addition are allowed so long as they don't deviate from the gist of the invention defined by each of Claims.

In the first embodiment, there is described one example in which by adding the fourth brake B4, two new speed stages with respective gear ratios are obtained and thus the automatic transmission can establish forward eleven speed and one reverse stages. However, if desired, either one of the two speed stages with respective gear ratios, which are provided by addition of the fourth brake B4, may be added.

In the first embodiment, there is described an example of automatic transmissions that establishes forward eleven speed stages and reverse one speed stage in accordance with a shift map during its running. However, if desired, a mode selecting switch may be employed for switching the operation mode between a normal running mode and an off-road running mode. That is, upon selecting the normal running mode, the automatic transmission is controlled to establish forward ten speed stages and one reverse speed stage without the first speed stage, and upon selecting the off-road running mode, the automatic transmission is controlled to establish underdrive side speed stages including the first speed stage.

In the first embodiment, there is described an example of automatic transmissions, which is applied to an engine vehicle and a hybrid vehicle. However, the vehicles to which the automatic transmission of the present invention are not limited to such vehicles. That is, the automatic transmission of the present invention can be applied to an electric vehicle and a fuel cell vehicle for improving electric consumption economy thereof.

## Claims

1. An automatic transmission comprising:
a first planetary gear unit, a second planetary gear unit, a third planetary gear unit and a fourth planetary gear unit which are employed as four planetary gear units;
a first brake, a second brake, a third brake, a first clutch, a second clutch and a third clutch which are employed as six frictional elements, the automatic transmission establishing forward nine speed stages by combination of simultaneously fastening three of the six frictional elements,
wherein:
a fourth brake is added to the six frictional elements thereby to provide seven frictional elements, the fourth brake detachably fixing a connecting member to a transmission case, the connecting member connecting a first ring gear of the first planetary gear unit to a second carrier of the second planetary gear unit; and
at least one speed stage is added to the automatic transmission by combination of simultaneously fastening three of the seven frictional elements with fastening of the fourth brake, so that the automatic transmission establishes speed stages that are equal to or more than forward ten speed stages.

2. An automatic transmission as claimed in Claim 1, in which:
a first speed stage is established when the second brake, the third clutch and the fourth brake are simultaneously fastened;
a second speed stage is established when the second brake, the third brake and the third clutch are simultaneously fastened;
a third speed stage is established when the second brake, the second clutch and third clutch are simultaneously fastened;
a fourth speed stage is established when the second brake, the third brake and the second clutch are simultaneously fastened;
a fifth speed stage is established when the second brake, the third brake and the first clutch are simultaneously fastened;
a sixth speed stage is established when the third brake, the first clutch and the second clutch are simultaneously fastened;
a seventh speed stage is established when the first clutch, the second clutch and the third clutch are simultaneously fastened;
an eighth speed stage is established when the third brake, the first clutch and the third clutch are simultaneously fastened;
a ninth speed stage is established when the first clutch, the third clutch and the fourth brake are simultaneously fastened;
a tenth speed stage is established when the first brake, the first clutch and the third clutch are simultaneously fastened; and
an eleventh speed stage is established when the first brake, the third brake and the first clutch are simultaneously fastened, so that the automatic transmission establishes forward eleven speed stages,
wherein the first speed stage added due to fastening of the fourth brake is set to a super-low gear ratio speed stage that is further lower in gear ratio than the first speed stage of the forward nine speed automatic transmission; and
wherein the ninth speed stage added due to fastening of the fourth brake is set to a high gear ratio speed stage that has a gear ratio put between respective gear ratios of the seventh and eighth speed stages of the forward nine speed automatic transmission.

3. An automatic transmission as claimed in Claim 1 or 2, in which:
the connecting member is a cylindrical drum member that is arranged to cover outer peripheral sides of the first and second planetary gear units; and
the fourth brake is disposed between an outer peripheral surface of the connecting member and an inner peripheral surface of the transmission case that faces the outer peripheral surface of the connecting member.

4. An automatic transmission as claimed in Claim 3, in which:
the fourth brake is a multiple disc brake that comprises mutually sandwiched drive and driven plates;
the connecting member is formed at the outer peripheral surface thereof with spline-engagement grooves with which the drive plates are engaged; and
the transmission case is formed at the inner peripheral surface thereof with spline-engagement grooves with which the driven plates are engaged.
